(19) Europäisches Patentamt

European Patent Office

Office européen des brevets

(11) **EP 1 694 012 A1**

(12) **EUROPEAN PATENT APPLICATION**

(43) Date of publication:
**23.08.2006 Bulletin 2006/34**

(51) Int Cl.:
***H04L 12/56*** *(2006.01)*

(21) Application number: **06300148.1**

(22) Date of filing: **20.02.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **18.02.2005 US 61300**

(71) Applicant: **Alcatel**
**75008 Paris (FR)**

(72) Inventor: **Lu, Jordan**
**Kanata**
**Ontario**
**K2K 3H7 (CA)**

(74) Representative: **Hervouet, Sylvie et al**
**Feray Lenne Conseil,**
**39/41, avenue Aristide Briand**
**92163 Anthony Cedex (FR)**

(54) **Method and apparatus for monitoring and improving performance of a queuing scheduler**

(57) A method and apparatus is provided to monitor and improve the performance of a queuing scheduler, such as one that utilizes a WFQ calendar (101), by adjusting the structure of the WFQ calendar (101), preferably automatically. Such apparatus may be implemented using a real time calendar-monitoring (RTCM) engine (100). A RTCM engine (100) preferably comprises a calendar information collector (CIC) (102) and a sub-calendar resolution calculator (SCRC) (103). A method may be performed, for example, by a CIC (102) and SCRC (103), in several phases. For example, in the first phase, the SCRC (103) issues a monitoring command to the CIC (102). In the second phase, the CIC (102) collects the calendar information. In the third phase, the SCRC (103) calculates the adjusted slot lengths of the sub-calendars. In the fourth phase, the CIC (102) receives the adjusted slot lengths of the sub-calendars and applies the adjusted slot lengths on the sub-calendars.

FIG. 1

**Description**

BACKGROUND OF THE INVENTION

(1) Field of the Invention

The present invention relates generally to communication networks and more particularly to queuing and scheduling in communication networks.

(2) Description of the Related Art

Communication of data over networks typically involves network elements that utilize queues. Data arriving at a network element are placed in a queue until the data are served by the network element. Fair queuing (FQ) is typically used to attempt to achieve some notion of fairness among flows of the data being communicated by providing separate queues for different flows. Weighted fair queuing (WFQ) is a refinement of FQ furthering that goal by attempting to achieve fairness among users, where users may include sources of flows, destinations of flows, source-destination groupings of flows, and/or computational processes involved in the origination or use of the data being communicated. Such techniques are useful for promoting fair allocation of available bandwidth, lower delay for flows and/or users using less than their full share of bandwidth, and/or protection from ill-behaved flows and/or users.

To service data placed in several queues, such as data of several flows for which FQ, such as WFQ, is implemented, a scheduler is provided to schedule the dequeuing of the data. WFQ may be beneficially implemented as a calendar when a large number of queues share the same link and are provided for the arbitration. The performance of a WFQ calendar can significantly affect characteristics such as delay and jitter. In addition, the performance of a WFQ calendar depends on the traffic pattern and calendar structure. While a WFQ calendar of a particular structure may provide acceptable performance for one set of flows of data having certain attributes, it might be ill suited for another set of flows of data having different attributes.

WFQ schedulers have been widely applied in asynchronous transfer mode (ATM) and internet protocol (IP) networks and their use has proven to be a practical approach to improve network performance and achieve a better quality of service (QoS) assurance. With increased use of virtual private networks (VPNs), WFQ schedulers will serve increasingly important roles in networks.

There are a number of ways to implement WFQ, and a popular way that supports a large number of queues with diversified bandwidth requirements and various packet sizes uses a calendar structure. Since per virtual circuit (per VC) scheduling provides the arbitration among a large amount of queues, a calendar-based WFQ scheduler (i.e., WFQ calendar) is often used for per VC scheduling. Because the calendar exhibits granularity, any WFQ calendar will have implementation errors.

One of the most important errors is the collision error. The collision error could happen when a number of packets are scheduled on the same calendar slot, and it will introduce the delay variation (i.e., jitter). To minimize the collision error, the calendar is designed with fine resolution. However, a calendar with finer resolution requires more memory to implement. In addition, if a service router is required to support a large number of channels, classes, and aggregation queues, a large number of WFQ calendars may be required in such a service router. For these reasons, practical limits are imposed on how fine the granularity of WFQ calendars may be. In order to use limited resources to achieve the best performance, a WFQ calendar is structured as a number of sub-calendars of different granularity, giving finer granularity to higher bandwidth queues since lower bandwidth queues tolerate relatively greater delay variations. However, once such a WFQ calendar is established, its structure is essentially fixed. While its configuration of sub-calendars and their different granularities may provide acceptable performance for one set of flows of data having certain attributes, such a configuration might be ill suited for another set of flows of data having different attributes. Thus, a technique is needed to overcome such deficiencies.

BRIEF DESCRIPTION OF THE SEVERAL VIEWS OF THE DRAWINGS

The present invention may be better understood, and its features made apparent to those skilled in the art by referencing the accompanying drawings.

Figure 1 is a block diagram illustrating an overview of a real-time calendar monitoring (RTCM) engine in accordance with at least one embodiment of the present invention.

Figure 2 is a flow diagram illustrating a method for monitoring and improving the performance of a queuing scheduler in accordance with at least one embodiment of the present invention.

Figure 3 is a block diagram illustrating a data structure of a calendar information collector (CIC) of an apparatus in accordance with at least one embodiment of the present invention.

Figure 4 is a block diagram illustrating a structure of the CIC of an apparatus in accordance with at least one embodiment of the present invention.

Figure 5 is a block diagram illustrating a four-tier 32-slot WFQ calendar in accordance with at least one embodiment of the present invention.

Figures 6A and 6B are a flow diagram illustrating an example of a method in accordance with at least one embodiment of the present invention.

Figure 7 is a block diagram illustrating an example of a processor that may be used to implement an apparatus in accordance with at least one embodiment of the present invention.

The use of the same reference symbols in different drawings indicates similar or identical items.

Detailed Description OF THE INVENTION

A method and apparatus is provided to monitor and improve the performance of a queuing scheduler, such as one that utilizes a WFQ calendar, by adjusting the structure of the WFQ calendar, preferably automatically. Such apparatus may be implemented using a real-time calendar-monitoring (RTCM) engine. A RTCM engine preferably comprises a calendar information collector (CIC) and a sub-calendar resolution calculator (SCRC). A method may be performed, for example, by a CIC and SCRC, in several phases. For example, in the first phase, the SCRC issues a monitoring command to the CIC. In the second phase, the CIC collects the calendar information. In the third phase, the SCRC calculates the adjusted slot lengths of the sub-calendars. In the fourth phase, the CIC receives the adjusted slot lengths of the sub-calendars and applies the adjusted slot lengths to the sub-calendars.

Thus, use of such a method and/or apparatus can reduce collision errors by customizing each individual calendar and changing the calendar structure, preferably dynamically and automatically. The collision error of a WFQ calendar depends on the following three factors: (1) the number of queues on the calendar; (2) the configured weight of each queue; and (3) the traffic pattern (e.g., the packet size and the sequence of the packets) of each queue. The three factors are different for different WFQ calendars, so a WFQ calendar is preferred to have its own structure in accordance with such factors. To facilitate that, the length of the calendar slot of a WFQ sub-calendar should be adjustable. In addition, since the traffic pattern for a queue is dynamic and is different at different times or locations, the traffic pattern should be monitored in order to de termine the best calendar structure. To maximize the practical utility of such monitoring and adjustment, an automation scheme is preferred, such as an engine that is able to monitor the behavior of the calendar and adjust the slot lengths of sub-calendars automatically based on the monitored information.

Collision delay variation can affect the fairness of queuing using a multi-tier WFQ calendar. Generally, a WFQ calendar will roughly achieve fair delay variation for all the packets if the amount of data on each calendar slot is distributed evenly. The fair delay variation means the delay variation is proportional to the packets size and inversely proportional to the bandwidth of the queue. A RTCM engine is useful toward the goal of achieving fair delay variation.

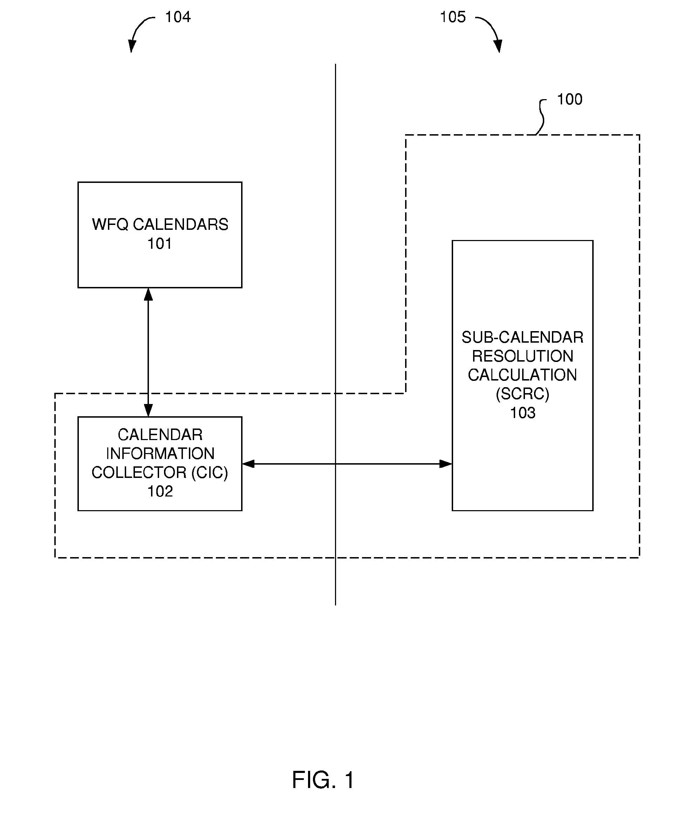

Figure 1 is a block diagram illustrating an overview of a RTCM engine in accordance with at least one embodiment of the present invention. The phrase "real-time," as used in RTCM, is understood to mean that the RTCM is able to perform reconfiguration of at least one calendar while system in which the RTCM is used is available for processing data being communicated over a network. For example, the RTCM may perform monitoring of data while data is being communicated. As another example, the RTCM may also perform determination of slot length adjustments while data is being communicated. As a further example, the RTCM may cause the slot length adjustments to be applied to the calendar to which they pertain when that calendar is empty.

The RTCM engine 100 comprises a CIC 102, which may be implemented in the data plane 104, and a SCRC 103, which may be implemented in the control plane 105. The SCRC 103 is coupled to the CIC 102, which is preferably able to access every WFQ calendar 101. The CIC 102 monitors the behavior of the WFQ calendar 101. The SCRC 103 issues monitoring parameters to the CIC 102 and receives aggregated calendar information from the CIC 102. The SCRC 103 also calculates the optimal slot lengths of the sub-calendars and passes adjustments for the slot lengths of sub-calendars to the CIC 102. The CIC 102 then implements the adjustments by updating the slot lengths of the WFQ calendar 101 in accordance with the adjustments.

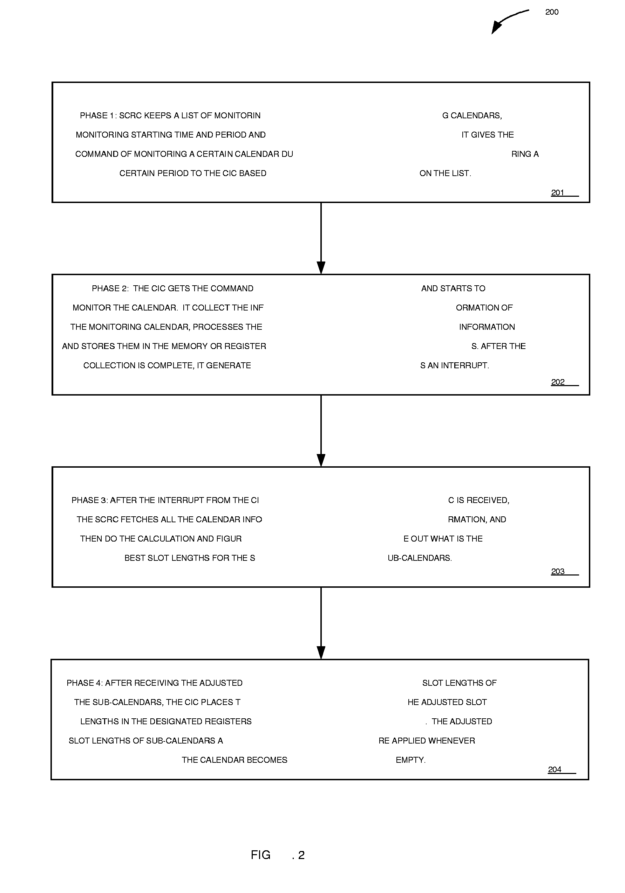

Figure 2 is a flow diagram illustrating a method for monitoring and improving the performance of a queuing scheduler in accordance with at least one embodiment of the present invention. The method comprises four phases. In phase 201, the SCRC 103 issues the monitoring command to the CIC 102. In phase 202, the CIC 102 collects the calendar information. In phase 203, the SCRC 103 calculates the adjusted slot lengths of the sub-calendars. In phase 204, the CIC 102 receives the adjusted slot lengths of the sub-calendars and applies the adjusted slot lengths on the sub-calendars. The four phases are preferably performed sequentially.

In phase 201, the SCRC sets up a list of RTCM engine parameters comprising calendar identifiers and monitoring time and/or monitoring periods. Also, the SCRC 103 is preferably abb to reset the "elapsed time point" in the CIC 102. According to the list of the RTCM engine parameters, the SCRC updates the "monitoring calendar ID," "start time for the RTCM," "end time for the RTCM," and "enable signal for the RTCM" in the RTCM engine.

In phase 202, the CIC 102 starts monitoring the calendar when the "enable signal for the RTCM" is set and the "elapse time pointer" is equal to the "start time for RTCM." Every time a packet is hung on the monitored calendar, the "accumulated amount of data" in the slot on which the packet is hung is incremented by the length of the packet. Every time a packet is hung on the monitored calendar, the "largest amount of data in each slot" is updated to be the actual amount of data in the slot if the actual amount of data in the slot is greater than "the largest amount of data" for that slot. Please note the actual amount of data in the slot is obtained by subtracting "accumulated amount of serviced data of the slot" by "accumulated amount of data of the slot." Every time a packet is hung on the monitored calendar, the "maximum scheduling period" is updated if the actual scheduling period is larger than the "maximum scheduling period" in the register. Every time a packet is dispatched from the monitored calendar, the "accumulated amount of serviced data" of the slot from which the packet was dispatched is decremented by the packet length. The CIC 102 can stop working when the "end time for RTCM" is reached The CIC 102 gives an interrupt to the SCRC 103 to indicate the requested calendar information is obtained.

In phase 203, The SCRC 103 checks whether it needs to adjust the overall calendar length based on the "maximum scheduling period." The SCRC 103 will adjust the slot length of the lowest resolution sub-calendar using the following equation. The slot length of a sub-calendar is preferably a power of 2 value in order to simplify the implementation, so $R_m$, which represents the slot length of the lowest resolution sub-calendar, is rounded up the nearest power of 2 value.

$$R_m = \begin{cases} \left[ \dfrac{\max\_ scheduling\_ period}{N_m - 1} \right], & \text{if } \dfrac{\max\_ scheduling\_ period}{N_m - 1} \text{ is an integer} \\ \left[ \dfrac{\max\_ scheduling\_ period}{N_m - 1} \right] + 1, & \\ & \text{if } \dfrac{\max\_ scheduling\_ period}{N - 1} \text{ is not an integer} \end{cases}$$

Also as part of phase 203, the SCRC 103 checks whether it needs to adjust the slot lengths of sub-calendars based on either the "accumulated amount of data on each slot" or "the largest amount of data on each slot." Two options for the adjustments are as follow: (1) adjust the slot lengths cf the sub-calendars in favor of the high bandwidth queues and (2) adjust the slot lengths of the sub-calendars in favor of the low bandwidth queues. An example on adjusting the slot lengths of the sub-calendars of a 4-tier 32-slot WFQ calendar is shown in the appendix.

In phase 204, the modified slot lengths of the sub-calendars are written to the CIC 102. The modified slot lengths will be applied after the monitored WFQ calendar becomes empty.

According to the four phases described above, the adjusted slot lengths for the sub-calendars are determined and applied. For any given calendar, the RTCM engine may be operated and/or the above four phases may be performed repeatedly, either regularly or irregularly. For example, the process need not occur every hour or every day. Since the worst case of the collision errors happen during congestion, the calendar could be monitored only on busy days and during busy hours. For typical traffic patterns that do not change much on a day-to-day basis, once the slot lengths of the sub-calendars are adjusted, they would not need to be re-adjusted for a fairly long time, for example several weeks, months, or even longer.

Any of a variety of conditions may be used as a stimulus for causing operation of an apparatus, such an RTCM engine, or performance of a method. For example, a congestion threshold may be set, and congestion may be monitored. If congestion exceeds the threshold, the method or apparatus may be caused to reconfigure one or more calendars, for example by adjusting one or more slot lengths for one or more sub-calendars. A collision delay variation threshold may be set, and collision delay variation may be monitored. If the collision delay variation exceeds the threshold, the method or apparatus may be caused to reconfigure one or more calendars. A maximum adjustment interval deadline may be set. If the time since the last operation of the adjustment apparatus or performance of the adjustment method exceeds the maximum adjustment interval deadline, the apparatus or method may be caused to reconfigure one or more calendars. If the reconfiguration would yield calendars of the same configuration as previously configured (i.e., there would be no change in configuration, as the calendars are already configured to what are determined to be the best values), the actual reconfiguration of the calendars need not occur as part of the reconfiguration process.

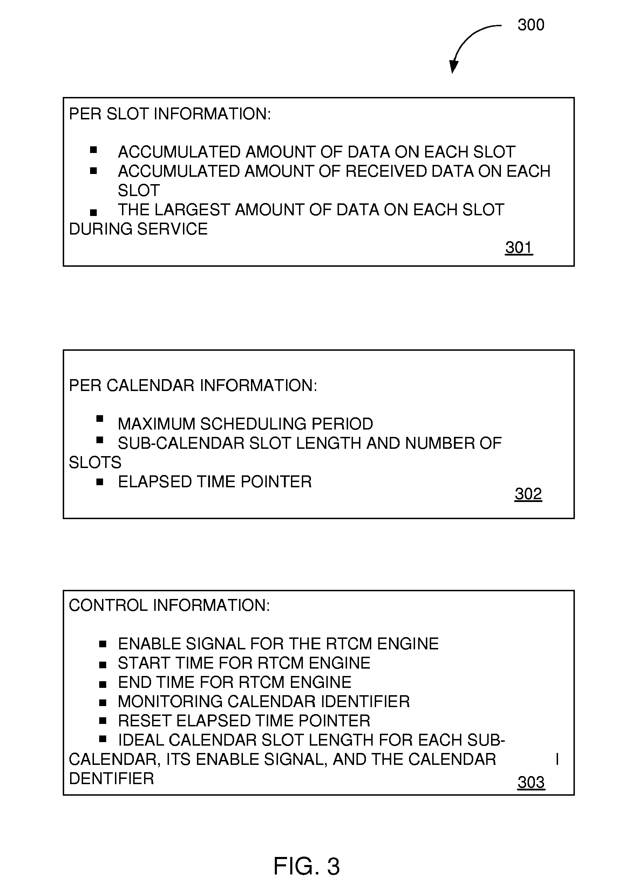

Figure 3 is a block diagram illustrating a data structure of a CIC of an apparatus in accordance with at least one embodiment of the present invention. The data structure 300 comprises per slot information 301, per calendar information 302, and control information 303. Per slot information 301 is the information for each slot of a monitored calendar and may comprise, for example, an accumulated amount of data on each slot, an accumulated amount of received data on each slot, and the largest amount of data on each slot during service. Per calendar information 302 is the information for the monitored calendar and may comprise, for example, a maximum scheduling period, a sub-calendar slot length and a number of slots, and an elapsed time pointer. The control information 303 is the information used to control the operation of the RTCM engine and may comprise, for example, an enable signal for the RTCM engine, a start time for the RTCM engine, an end time for the RTCM engine, a monitoring calendar identifier, a reset elapsed time pointer, and an ideal calendar slot length for each sub-calendar, its enable signal, and the calendar identifier.

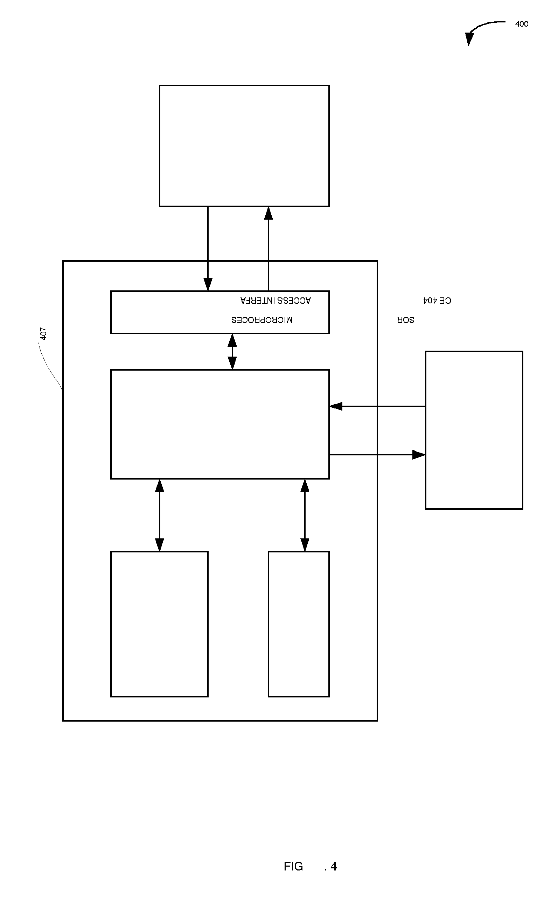

Figure 4 is a block diagram illustrating a structure of the CIC of an apparatus in accordance with at least one embodiment of the present invention. In that example, the CIC 407 comprises a microprocessor access interface 404, a monitor block 403, an internal memory 401, and registers 402. The microprocessor access interface 404 is coupled to and may communicate bidirectionally with memory access module 405. The monitor block 403 is coupled to and may communicate bidirectionally with WFQ calendar block 406.

The memory 401 and registers 402 provided in the CIC 407 may be fairly small (e.g., a few kilobits of memory and a few tens of bits of registers) or may be larger. In addition, the logic that is used to implement the CIC 407 need not be complex (e.g., the logic may comprise a couple of counters, etc.).

The SCRC is able to operate satisfactorily with a small memory to store the RTCM engine parameters (e.g., a few kilobytes of memory). In addition, the SCRC need only consume minimal processor time, and the process by which the SCRC uses that processor time can be executed as a low priority task.

The RTCM engine can help to improve performance of a calendar-based scheduler, as it can help to minimize the collision delay variation. Moreover, the RTCM engine is capable of collecting the calendar information and adjusting the slot lengths of the sub-calendars automatically, thereby operating in a near real-time manner. Furthermore, an RTCM engine may be implemented using minimal resources, e.g., a few kilobits of memory, a few tens of bits of registers, a microprocessor access interface, and some counters. Also, the CIC 102 and SCRC 103 are components that need not have many interactions with other functional blocks. Thus, even in the event of some fault in either CIC 102 or SCRC 103, the functionality of other components is not substantially affected.

The RTCM engine is capable of providing insight as to the traffic pattern on a calendar. Since a calendar is treated as a traffic aggregation point in a router/switch, such insight provides an understanding of the traffic pattern on some traffic aggregation points. Therefore, the RTCM engine may be beneficially applied to helping perform statistical research on networks.

The characteristics of WFQ calendars that affect scheduler performance can be difficult to fully understand due to their complexity. A RTCM engine may be beneficially applied to simplify the testing and debugging of WFQ calendars, for example in a laboratory environment. Beyond the laboratory, the RTCM engine may be beneficially applied to improving the WFQ performance of switching and routing devices.

Configurable parameters may be used to implement an RTCM engine or to control a process for monitoring and improving the performance of a queuing scheduler. For example, an option of whether the RTCM engine is enabled or disabled may be provided to allow selection and deselection of the RTCM engine. As another example, the option of when to activate the RTCM engine may be provided so as to allow control over the operation of the RTCM engine.

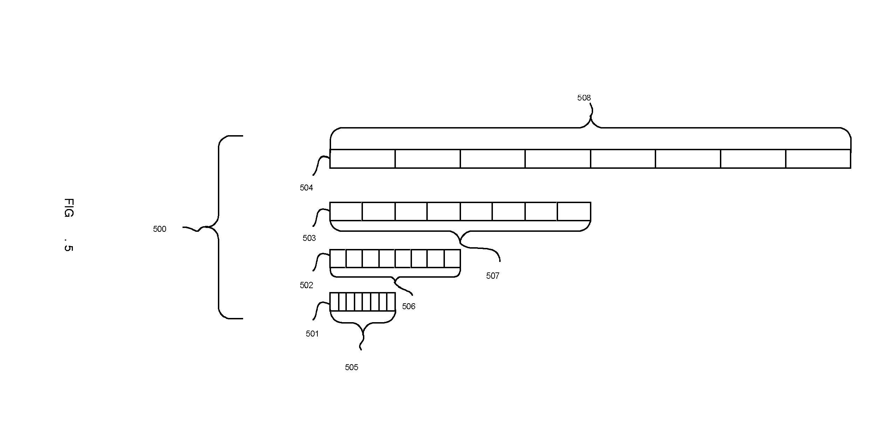

Figure 5 is a block diagram illustrating a four-tier 32-slot WFQ calendar in accordance with at least one embodiment of the present invention. The four-tier 32-slot WFQ calendar 500 comprises tiers 501, 502, 503, and 504. Tier 501, which corresponds to the sub-calendar of highest resolution, comprises slots 505. Tier 502, which corresponds to the sub-calendar of second highest resolution, comprises slots 506. Tier 503, which corresponds to the sub-calendar of second lowest resolution, comprises slots 507. Tier 504, which corresponds to the sub-calendar of lowest resolution, comprises slots 508. The slot lengths of sub-calendars are adjustable. The following pseudo codes show how to adjust the slot length based on the amount of data in each calendar slot during the servicing of the slots. The idea of the adjustment is to make the amount data that are hung on the each calendar slot equal during the servicing of the slot.

$R_x$: represents the original slot length of the sub-calendar x, where x is an integer which is between 0 and 3 and indicates sub-calendar 0, 1, 2, and 3. Sub-calendar 0, 1, 2, 3 refer to the highest, second highest, second lowest, lowest resolution sub-calendar, respectively.

$R'_x$: represents an adjusted value of $R_x$.

*ideal_data*: means the ideal data in each calendar slot during the servicing of the slots.

*average_data$_x$*: means the average data in each calendar slot for the sub-calendar x during the servicing of the slot.

*average_data$_x$* : means the adjusted value for *average_data$_x$*.

*favor_hibw:* means that the scheduler favors the high bandwidth queues if it is true; otherwise, it favors the low bandwidth queues.

-- determine the *ideal_data*

$$ideal\_data = \frac{average\_data_0 \cdot \dfrac{R_3}{R_0} + average\_data_1 \cdot \dfrac{R_3}{R_1} + average\_data_2 \cdot \dfrac{R_3}{R_2} + average\_data_3 \cdot \dfrac{R_3}{}}{\dfrac{R_3}{R_0} + \dfrac{R_3}{R_1} + \dfrac{R_3}{R_2} + 1}$$

--determine the $R_0^{'}$

-- Initialization

$$average\_data_0^{'} = average\_data_0$$

$$average\_data_1^{'} = average\_data_1$$

$$average\_data_2^{'} = average\_data_2$$

$$average\_data_3^{'} = average\_data_3$$

$$R_0^{'} = R_0$$

$$R_1^{'} = R_1$$

$$R_2^{'} = R_2$$

$$R_3^{'} = R_3$$

if $((average\_data_0 < ideal\_data)$  {

while $(average\_data_0^{'} < ideal\_data)$  {

$$R_0^{'} = 2 \cdot R_0^{'}$$

$$average\_data_0^{tmp1} = average\_data_0^{'}$$

$$average\_data_1^{tmp1} = average\_data_1^{'}$$

$$average\_data_2^{tmp1} = average\_data_2^{'}$$

$$average\_data_3^{tmp1} = average\_data_3^{'}$$

if $(R_0^{'} \leq R_1)$ then

$$average\_data_0^{'} = \frac{R_0^{'}}{R_0} \cdot average\_data_0^{'} + \frac{R_0^{'}}{R_1} \cdot average\_data_1^{'}$$

$$average\_data_1^{'} = \frac{R_1 - R_0^{'}}{R_1} \cdot average\_data_1^{'}$$

$$average\_data_2^{'} = average\_data_2^{'}$$

$$average\_data_3^{'} = average\_data_3^{'}$$

else if ( $R_0^{'} \le R_2$ ) then

$$average\_data_0^{'} = \frac{R_0^{'}}{R_0} average\_data_0^{'} + \frac{R_0^{'}}{R_1} \cdot average\_data_1^{'} + \frac{R_0^{'}}{R_2} \cdot average\_data_2^{'}$$

$$average\_data_1^{'} = 0$$

$$average\_data_2^{'} = \frac{R_2 - R_0^{'}}{R_2} \cdot average\_data_2^{'}$$

$$average\_data_3^{'} = average\_data_3^{'}$$

else if ( $R_0^{'} \le R_3$ ) {

$$average\_data_0^{'} = \frac{R_0^{'}}{R_0} average\_data_0 + \frac{R_0^{'}}{R_1} \cdot average\_data_1 + \frac{R_0^{'}}{R_2} \cdot average\_data_2$$

$$+ \frac{R_0^{'}}{R_3} \cdot average\_data_3$$

$$average\_data_1^{'} = 0$$

$$average\_data_2^{'} = 0$$

$$average\_data_3^{'} = \frac{R_3 - R_0^{'}}{R_3} \cdot average\_data_3$$

}

}

}

else if $(average\_data_0 > ideal\_data)$ {

while $(average\_data_0^{'} > ideal\_data^{'})$ {

$$R_0^{'} = \frac{1}{2} \cdot R_0^{'}$$

$$average\_data_0^{tmp1} = average\_data_0^{'}$$

$$average\_data_1^{tmp1} = average\_data_1^{'}$$

$$average\_data_2^{tmp1} = average\_data_2^{'}$$

$$average\_data_3^{tmp1} = average\_data_3^{'}$$

$$average\_data_3^{'} = average\_data_3^{'}$$

$$average\_data_2^{'} = average\_data_2^{'}$$

$$average\_data_1^{'} = average\_data_1^{'} + \frac{R_1}{R_0} \cdot (1 - \frac{R_0^{'}}{R_0}) \cdot average\_data_0^{'}$$

$$average\_data_0^{'} = \frac{1}{2} \cdot average\_data_0^{'}$$

}

else {

$$R_0^{'} = R_0^{'}$$

$$average\_data_0^{'} = average\_data_0$$

$$average\_data_1' = average\_data_1$$

$$average\_data_2' = average\_data_2$$

$$average\_data_3' = average\_data_3$$

} 

if ( $favor\_hibw$=True and $R_0' > R_0$ ) {

$$R_0' = \frac{R_0'}{2}$$

$$average\_data_0' = average\_data_0^{tmp1}$$

$$average\_data_1' = average\_data_1^{tmp1}$$

$$average\_data_2' = average\_data_2^{tmp1}$$

$$average\_data_3' = average\_data_3^{tmp1}$$

} 

else if ( $favor\_hibw$=False and $R_0' < R_0$ ) {

$$R_0' = 2 \cdot R_0'$$

$$average\_data_0' = average\_data_0^{tmp1}$$

$$average\_data_1' = average\_data_1^{tmp1}$$

$$average\_data_2' = average\_data_2^{tmp1}$$

$$average\_data'_3 = average\_data_3^{tmpl}$$

$$\}$$

-- calculate the new ideal data.

$$ideal\_data' = \frac{average\_data'_1 \cdot R_3/R_1 + average\_data'_2 \cdot R_3/R_2 + average\_data'_3}{R_3/R_1 + R_3/R_2 + 1}$$

$$\text{if} \, ( average\_data'_1 < ideal\_data' ) \, \{$$

$$\text{while} \, ( average\_data'_1 < ideal\_data ) \, \{$$

$$R'_1 = 2 \cdot R'_1$$

$$average\_data_1^{tmpl} = average\_data'_1$$

$$average\_data_2^{tmpl} = average\_data'_2$$

$$average\_data_3^{tmpl} = average\_data'_3$$

$$\text{if} \, ( R'_1 \leq R_2 ) \, \{$$

$$average\_data'_1 = \frac{R'_1}{R_1} average\_data'_1 + \frac{R'_1}{R_2} \cdot average\_data'_2$$

$$average\_data'_2 = \frac{R_2 - R'_1}{R_2} \cdot average\_data'_2$$

$$average\_data'_3 = average\_data'_3$$

}

else if ( $R_1^{'} \leq R_3$ ) {

$$average\_data_1^{'} = \frac{R_1^{'}}{R_1} \cdot average\_data_1^{'} + \frac{R_1^{'}}{R_2} \cdot average\_data_2^{'}$$

$$+ \frac{R_1^{'}}{R_3} \cdot average\_data_3^{'}$$

$$average\_data_2^{'} = 0$$

$$average\_data_3^{'} = \frac{R_3 - R_1^{'}}{R_3} \cdot average\_data_3^{'}$$

}

}

    }

else if ( $average\_data_1^{'} > ideal\_data^{'}$ ) {

    while ( $average\_data_1^{'} > ideal\_data$ ) {

$$R_1^{'} = \frac{1}{2} \cdot R_1^{'}$$

$$average\_data_1^{tmp1} = average\_data_1^{'}$$

$$average\_data_2^{tmp1} = average\_data_2^{'}$$

$$average\_data_3^{tmp1} = average\_data_3^{'}$$

$$average\_data_3^{'} = average\_data_3$$

$$average\_data_2^{'} = average\_data_2 + \frac{R_2}{R_1} \cdot (1 - \frac{R_1^{'}}{R_1}) \cdot average\_data_1^{'}$$

$$average\_data_1^{'} = \frac{1}{2} \cdot average\_data_1^{'}$$

$$\}$$

$$\}$$

else {

$$R_1^{'} = R_1$$

$$average\_data_1^{'} = average\_data_1$$

$$average\_data_2^{'} = average\_data_2$$

$$average\_data_3^{'} = average\_data_3$$

$$\}$$

if ( $favor\_hibw$ =True and $R_1^{'} > R_1$ ) {

$$R_1^{'} = \frac{R_1^{'}}{2}$$

$$average\_data_1^{'} = average\_data_1^{tmp1}$$

$$average\_data_2^{'} = average\_data_2^{tmp1}$$

$$average\_data_3^{'} = average\_data_3^{tmpl}$$

$$\}$$

else if ( $favor\_hibw$=False and $R_1^{'} < R_1$ ) {

$$R_1^{'} = 2 \cdot R_1^{'}$$

$$average\_data_1^{'} = average\_data_1^{tmpl}$$

$$average\_data_2^{'} = average\_data_2^{tmpl}$$

$$average\_data_3^{'} = average\_data_3^{tmpl}$$

$$\}$$

-- calculate the new ideal_data

$$ideal\_data^{'} = \frac{average\_data_2^{'} \cdot R_3 / R_2 + average\_data_3^{'}}{R_3 / R_2 + 1}$$

if ($average\_data_2^{'} < ideal\_data^{'}$) {

while ($average\_data_2^{'} < ideal\_data^{'}$) {

$$R_2^{'} = 2 \cdot R_2^{'}$$

$$average\_data_2^{tmpl} = average\_data_2^{'}$$

$$average\_data_3^{tmp1} = average\_data_3^{'}$$

$$\text{if } ( R_2^{'} \le R_3 ) \{$$

$$average\_data_2^{'} = average\_data_2^{'} + \frac{R_2^{'}}{R_3} \cdot average\_data_3^{'}$$

$$average\_data_3^{'} = \frac{R_3 - R_2^{'}}{R_3} \cdot average\_data_3^{'}$$

$$\}$$

$$\}$$

$$\}$$

$$\text{else if } ( average\_data_2^{'} > ideal\_data^{'} ) \{$$

$$\text{while } ( average\_data_2^{'} > ideal\_data^{'} ) \{$$

$$R_2^{'} = \frac{1}{2} \cdot R_2^{'}$$

$$average\_data_2^{tmp1} = average\_data_2^{'}$$

$$average\_data_3^{tmp1} = average\_data_3^{'}$$

$$average\_data_3^{'} = average\_data_3 + \frac{R_3}{R_2} \cdot (1 - \frac{R_2^{'}}{R_2}) \cdot average\_data_2^{'}$$

$$average\_data_2^{'} = \frac{1}{2} \cdot average\_data_2^{'}$$

```
                    }

                            }

                    else {

            R'_2 = R_2
```

$$R'_2 = R_2$$

$$average\_data'_2 = average\_data_2$$

$$average\_data'_3 = average\_data_3$$

```
                    }
```

$$\text{if } (\ favor\_hibw=\text{True and } R'_2 > R_2\ )\ \{$$

$$R'_2 = \frac{R'_2}{2}$$

$$average\_data'_2 = average\_data_2^{tmp1}$$

$$average\_data'_3 = average\_data_3^{tmp1}$$

```
                    }
```

$$\text{else if } (\ favor\_hibw=\text{False and } R'_2 < R_2\ )\ \{$$

$$R'_2 = 2 \cdot R'_2$$

$$average\_data'_2 = average\_data_2^{tmp1}$$

$$average\_data'_3 = average\_data_3^{tmp1}$$

```
                            }
```

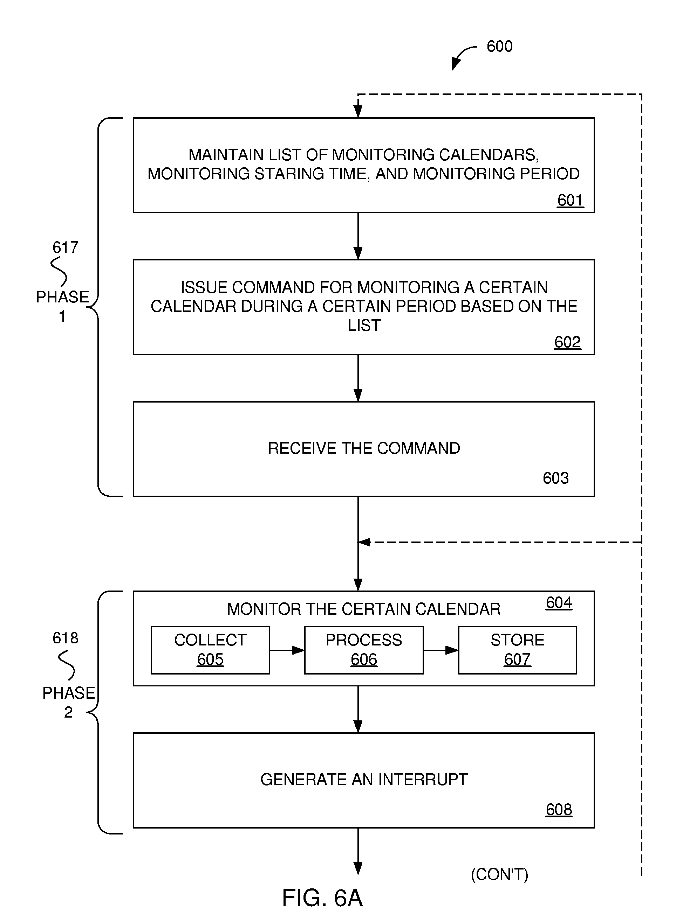

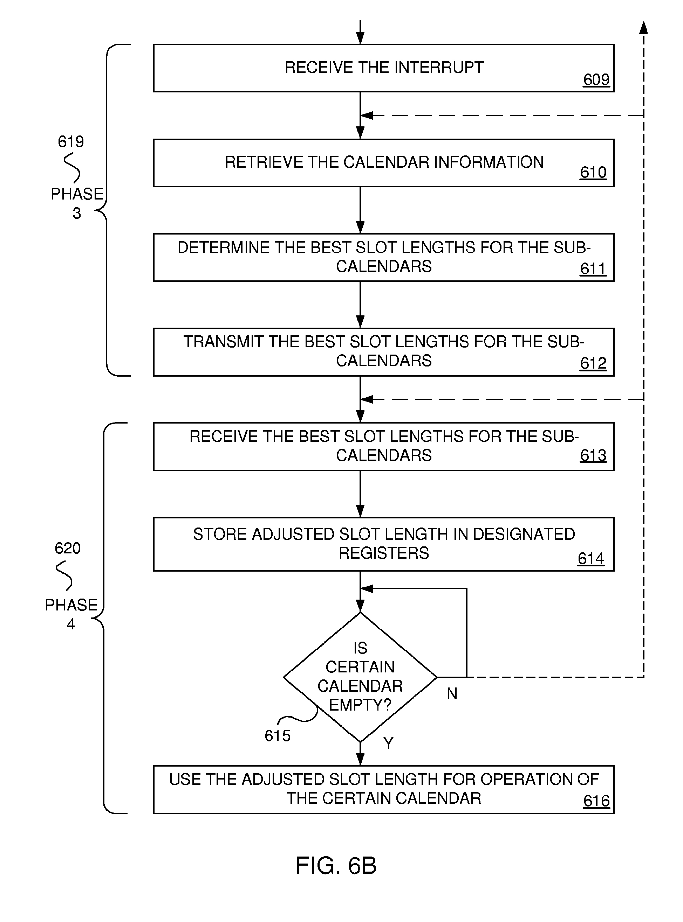

Figures 6A and 6B are a flow diagram illustrating an example of a method in accordance with at least one embodiment of the present invention. The method 600 comprises a plurality of phases 617, 618, 619, and 620. Phase 617 comprises a plurality of steps 601, 602, and 603. Phase 617 begins at step 601, where a list of monitoring calendars and monitoring time information, such as a monitoring start time, a monitoring end time, and/or a monitoring period, are maintained, for example by a SCRC. In step 602, a command is issued, for example by a SCRC, for monitoring a certain calendar during a certain period based on a list. In step 603, the command is received, for example, at a CIC.

Phase 618 comprises a plurality of steps 604 and 608. In step 604, a calendar is monitored, for example by the CIC. Step 604 may comprise a plurality of steps 605, 606, and 607. In step 605, information regarding the calendar is collected.

In step 606, the information regarding the calendar is processed. In step 607, the results of the processing in step 606 are stored. In step 608, an interrupt is generated, for example by the CIC.

Phase 619 comprises a plurality of steps 609, 610, 611, and 612. In step 609, the interrupt is received, for example by the SCRC. In step 610, the calendar information stored in step 606 is retrieved, for example by the SCRC. In step 611, the best slot lengths of the sub-calendars are determined. As the ideal slot lengths may depend upon information not available and/or not obtained, such as information regarding future calendar operation, the best slot lengths determined in step 611 may be merely an approximation or best practically determinable slot lengths. In step 612, the best slot lengths for the sub-calendars are transmitted, for example, by the SCRC to the CIC.

Phase 620 comprises a plurality of steps 613, 614, 615, and 616. In step 613, the best slot lengths for the sub-calendars are received, for example by the CIC. In step 614, the adjusted slot lengths are stored in the designated registers, for example by the CIC. In step 615, a determination is made as to whether or not the calendar to which the adjusted slot lengths pertain is empty. If the calendar is not empty, the process either remains at step 615 until the calendar becomes empty or returns to an earlier step in the process, for example, step 601, step 604, step 610, or step 613, which may allow updated or additional adjusted slot lengths to be determined. After it is determined that the calendar to which the adjusted slot lengths pertain is empty, the process continues to step 616, where the adjusted slot lengths are used for operation of the calendar. From step 616, the process may be repeated at any desired time, which may occur frequently or infrequently.

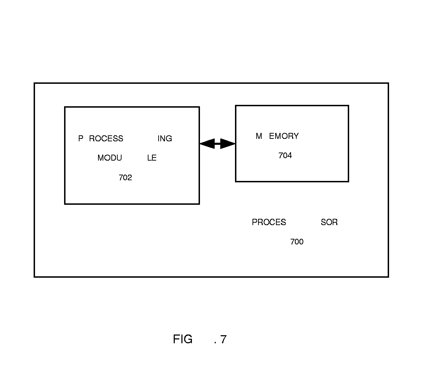

Figure 7 is a block diagram illustrating an example of a processor that may be used to implement an apparatus in accordance with at least one embodiment of the present invention. Such a processor may be used to implement such an apparatus generally, or it may be used to implement the functionality of a CIC, a SCRC, both a CIC and a SCRC, or a subset or superset of such functionality. The processor 700 includes a processing module 702 and a memory 704. The processing module 702 may include a single processing entity or a plurality of processing entities. Such a processing entity may be a microprocessor, a microcontroller, a digital signal processor, a state machine, logic circuitry, or any device that processes information based on operational or programming instructions.

The memory 704 may be a single memory device or a plurality of memory devices. Such a memory device may be a read-only memory device, a random access memory device, a floppy disk, a hard drive memory, or any device that stores digital information. Note that when the processing module 702 has one or more of its functions performed by a state machine or logic circuitry, the memory containing the corresponding operational instructions is embedded within the state machine or logic circuitry.

The memory 704 stores programming or operational instructions that allow the processing module 702 to perform at least portions of the methods illustrated in Figures 2, 6A, and 6B and described herein. Thus, the operational instructions stored within the memory 704, when executed by the processing module 702, cause the processing module 702 to perform functions associated with monitoring and improving performance of a queuing scheduler. In the case where the processor 700 stores a database of information regarding one or more calendars, such a database may be stored in the memory 704.

In accordance with at least one embodiment of the present invention, a method comprises collecting data pertaining to monitoring parameters for a WFQ calendar, wherein the WFQ calendar comprises sub-calendars having slot lengths for scheduling communications; determining, according to the data, adjustments to the slot lengths; and updating the slot lengths in accordance with the adjustments.

Optionally, the method may be performed wherein the updating the slot lengths further comprises iteratively updating the slot lengths in accordance with iteratively determined adjustments to the slot lengths. Optionally, the method may be performed wherein the iteratively updating the slot lengths is performed during periods of high traffic congestion.

Optionally, the method may further comprise determining the monitoring parameters such that the monitoring parameters comprise calendar identifiers and times for monitoring. Optionally, the method may be performed wherein the determining the monitoring parameters further comprises determining the monitoring parameters such that the times for monitoring comprise a start time and an end time. Optionally, the method may be performed wherein the collecting data occurs when an elapsed time pointer is at least equal to the start time and ends when the elapsed time pointer is at least equal to the end time.

Optionally, the method may be performed wherein collecting data comprises collecting a maximum scheduling period value, wherein determining the adjustments to the slot lengths comprises determining an adjustment to a slot length of the lowest resolution sub-calendar based on the maximum scheduling period value. Optionally, the method may be performed wherein collecting data further comprises collecting an accumulated amount of data value and a largest amount of data value, wherein determining the adjustments to the slot lengths comprises determining the adjustment to the slot length based on a value selected from the group consisting of the accumulated amount of data value and the largest amount of data value. Optionally, the method may be performed wherein the determining adjustments of the slot lengths occurs in favor of higher bandwidth queues. Optionally, the method may be performed wherein the determining adjustments of the slot lengths occurs in favor of lower bandwidth queues.

Optionally, the method may be performed wherein the updating the slot lengths occurs such that the updated slot lengths will be applied after the WFQ calendar becomes empty.

In accordance with at least one embodiment of the present invention, system is provided comprising a calendar information collector for collecting data pertaining to monitoring parameters for a weighted-fair-queuing (WFQ) calendar, wherein the WFQ calendar comprises sub-calendars having slot lengths for scheduling communications; and a sub-calendar resolution calculator for determining, according to the data, adjustments to the slot lengths, wherein the slot lengths are updated in accordance with the adjustments.

Optionally, the system may be implemented wherein the sub-calendar resolution calculator iteratively determines the adjustments to the slot lengths, wherein the slot lengths are iteratively updated in accordance with iteratively determined adjustments to the slot lengths. Optionally, the system may be implemented wherein the sub-calendar resolution calculator iteratively determines the adjustments to the slot lengths during periods of high traffic congestion.

Optionally, the system may be implemented wherein the sub-calendar resolution calculator issues the monitoring parameters, wherein the monitoring parameters comprise calendar identifiers and times for monitoring.

Optionally, the system may be implemented wherein the times for monitoring comprise a start time and an end time. Optionally, the system may be implemented wherein calendar information collector begins collecting data when an elapsed time pointer is at least equal to the start time and ends when the elapsed time pointer is at least equal to the end time.

Optionally, the system may be implemented wherein the data comprise a maximum scheduling period value, wherein the adjustments to the slot lengths comprise an adjustment to a slot length of the lowest resolution sub-calendar based on the maximum scheduling period value. Optionally, the system may be implemented wherein the data further comprise an accumulated amount of data value and a largest amount of data value, wherein the adjustments to the slot lengths comprise determining the adjustment to the slot length based on a value selected from the group consisting of the accumulated amount of data value and the largest amount of data value. Optionally, the system may be implemented wherein the adjustments of the slot lengths occur in favor of higher bandwidth queues. Optionally, the system may be implemented wherein the adjustments of the slot lengths occur in favor of lower bandwidth queues.

Optionally, the system may be implemented wherein the slot lengths are updated such that the updated slot lengths will be applied after the WFQ calendar becomes empty.

Accordingly, a method and apparatus for monitoring and improving the performance of a queuing scheduler has been described. It should be understood that the implementation of other variations and modifications of the invention in its various aspects will be apparent to those of ordinary skill in the art, and that the invention is not limited by the specific embodiments described. It is therefore contemplated to cover by the present invention, any and all modifications, variations, or equivalents that fall within the spirit and scope of the basic underlying principles disclosed and claimed herein.

**Claims**

1. A method comprising:

   collecting data pertaining to monitoring parameters for a weighted-fair-queuing (WFQ) calendar, wherein the WFQ calendar comprises sub-calendars having slot lengths for scheduling communications;
   determining, according to the data, adjustments to the slot lengths; and
   updating the slot lengths in accordance with the adjustments.

2. The method of claim 1 wherein the updating the slot lengths further comprises:

   iteratively updating the slot lengths in accordance with iteratively determined adjustments to the slot lengths.

3. The method of claim 2 wherein the iteratively updating the slot lengths is performed during periods of high traffic congestion.

4. The method of claim 1 further comprising:

determining the monitoring parameters such that the monitoring parameters comprise calendar identifiers and times for monitoring.

5. The method of claim 4 wherein the determining the monitoring parameters further comprises determining the monitoring parameters such that the times for monitoring comprise a start time and an end time.

6. The method of claim 5 wherein the collecting data occurs when an elapsed time pointer is at least equal to the start time and ends when the elapsed time pointer is at least equal to the end time.

7. The method of claim 1 wherein collecting data comprises collecting a maximum scheduling period value, wherein determining the adjustments to the slot lengths comprises determining an adjustment to a slot length of the lowest resolution sub-calendar based on the maximum scheduling period value.

8. The method of claim 7 wherein collecting data further comprises collecting an accumulated amount of data value and a largest amount of data value, wherein determining the adjustments to the slot lengths comprises determining the adjustment to the slot length based on a value selected from the group consisting of the accumulated amount of data value and the largest amount of data value.

9. The method of claim 8 wherein the determining adjustments of the slot lengths occurs in favor of higher bandwidth queues.

10. The method of claim 8 wherein the determining adjustments of the slot lengths occurs in favor of lower bandwidth queues.

11. The method of claim 1 wherein the updating the slot lengths occurs such that the updated slot lengths will be applied after the WFQ calendar becomes empty.

12. A system comprising:

a calendar information collector for collecting data pertaining to monitoring parameters for a weighted-fair-queuing (WFQ) calendar, wherein the WFQ calendar comprises sub-calendars having slot lengths for scheduling communications; and
a sub-calendar resolution calculator operably coupled to the calendar information collector for determining, according to the data, adjustments to the slot lengths, wherein the slot lengths are updated in accordance with the adjustments.

13. The system of claim 12 wherein the sub-calendar resolution calculator iteratively determines the adjustments to the slot lengths, wherein the slot lengths are iteratively updated in accordance with iteratively determined adjustments to the slot lengths.

14. The system of claim 13 wherein the sub-calendar resolution calculator iteratively determines the adjustments to the slot lengths during periods of high traffic congestion.

15. The system of claim 12 wherein the sub-calendar resolution calculator issues the monitoring parameters, wherein the monitoring parameters comprise calendar identifiers and times for monitoring.

16. The system of claim 15 wherein the times for monitoring comprise a start time and an end time.

17. The system of claim 16 wherein calendar information collector begins collecting data when an elapsed time pointer is at least equal to the start time and ends when the elapsed time pointer is at least equal to the end time.

18. The system of claim 12 wherein the data comprise a maximum scheduling period value, wherein the adjustments to the slot lengths comprise an adjustment to a slot length of the lowest resolution sub-calendar based on the maximum scheduling period value.

19. The system of claim 18 wherein the data further comprise an accumulated amount of data value and a largest amount of data value, wherein the adjustments to the slot lengths comprise determining the adjustment to the slot length based on a value selected from the group consisting of the accumulated amount of data value and the largest amount of data value.

20.  The system of claim 19 wherein the adjustments of the slot lengths occur in favor of higher bandwidth queues.

21.  The system of claim 19 wherein the adjustments of the slot lengths occur in favor of lower bandwidth queues.

22.  The system of claim 12 wherein the slot lengths are updated such that the updated slot lengths will be applied after the WFQ calendar becomes empty.

104

105

100

WFQ CALENDARS
101

SUB-CALENDAR
RESOLUTION
CALCULATION
(SCRC)
103

CALENDAR
INFORMATION
COLLECTOR (CIC)
102

FIG. 1

200

PHASE 1: SCRC KEEPS A LIST OF MONITORING CALENDARS,
MONITORING STARTING TIME AND PERIOD AND IT GIVES THE
COMMAND OF MONITORING A CERTAIN CALENDAR DURING A
CERTAIN PERIOD TO THE CIC BASED ON THE LIST.

201

PHASE 2: THE CIC GETS THE COMMAND AND STARTS TO
MONITOR THE CALENDAR. IT COLLECT THE INFORMATION OF
THE MONITORING CALENDAR, PROCESSES THE INFORMATION
AND STORES THEM IN THE MEMORY OR REGISTERS. AFTER THE
COLLECTION IS COMPLETE, IT GENERATES AN INTERRUPT.

202

PHASE 3: AFTER THE INTERRUPT FROM THE CIC IS RECEIVED,
THE SCRC FETCHES ALL THE CALENDAR INFORMATION, AND
THEN DO THE CALCULATION AND FIGURE OUT WHAT IS THE
BEST SLOT LENGTHS FOR THE SUB-CALENDARS.

203

PHASE 4: AFTER RECEIVING THE ADJUSTED SLOT LENGTHS OF
THE SUB-CALENDARS, THE CIC PLACES THE ADJUSTED SLOT
LENGTHS IN THE DESIGNATED REGISTERS. THE ADJUSTED
SLOT LENGTHS OF SUB-CALENDARS ARE APPLIED WHENEVER
THE CALENDAR BECOMES EMPTY.

204

FIG . 2

22

300

PER SLOT INFORMATION:

- ACCUMULATED AMOUNT OF DATA ON EACH SLOT
- ACCUMULATED AMOUNT OF RECEIVED DATA ON EACH SLOT
- THE LARGEST AMOUNT OF DATA ON EACH SLOT DURING SERVICE

301

PER CALENDAR INFORMATION:

- MAXIMUM SCHEDULING PERIOD
- SUB-CALENDAR SLOT LENGTH AND NUMBER OF SLOTS
- ELAPSED TIME POINTER

302

CONTROL INFORMATION:

- ENABLE SIGNAL FOR THE RTCM ENGINE
- START TIME FOR RTCM ENGINE
- END TIME FOR RTCM ENGINE
- MONITORING CALENDAR IDENTIFIER
- RESET ELAPSED TIME POINTER
- IDEAL CALENDAR SLOT LENGTH FOR EACH SUB-CALENDAR, ITS ENABLE SIGNAL, AND THE CALENDAR IDENTIFIER

303

FIG. 3

FIG . 4

FIG . 5

600

**617**

**PHASE 1**

MAINTAIN LIST OF MONITORING CALENDARS, MONITORING STARING TIME, AND MONITORING PERIOD
<u>601</u>

ISSUE COMMAND FOR MONITORING A CERTAIN CALENDAR DURING A CERTAIN PERIOD BASED ON THE LIST
<u>602</u>

RECEIVE THE COMMAND
603

**618**

**PHASE 2**

MONITOR THE CERTAIN CALENDAR <u>604</u>

COLLECT <u>605</u> → PROCESS <u>606</u> → STORE <u>607</u>

GENERATE AN INTERRUPT
<u>608</u>

(CON'T)

FIG. 6A

RECEIVE THE INTERRUPT    <u>609</u>

RETRIEVE THE CALENDAR INFORMATION    <u>610</u>

DETERMINE THE BEST SLOT LENGTHS FOR THE SUB-CALENDARS    <u>611</u>

TRANSMIT THE BEST SLOT LENGTHS FOR THE SUB-CALENDARS    <u>612</u>

619 〜 PHASE 3

RECEIVE THE BEST SLOT LENGTHS FOR THE SUB-CALENDARS    <u>613</u>

STORE ADJUSTED SLOT LENGTH IN DESIGNATED REGISTERS    <u>614</u>

IS CERTAIN CALENDAR EMPTY?   615   N

USE THE ADJUSTED SLOT LENGTH FOR OPERATION OF THE CERTAIN CALENDAR    <u>616</u>

620 〜 PHASE 4

FIG. 6B

```
┌─────────────────────────────────────────────────────────┐
│                                                         │
│   ┌───────────────────────┐      ┌──────────────────┐   │
│   │                       │      │                  │   │
│   │  P ROCESS      ING    │ ◄──► │  M  EMORY        │   │
│   │      MODU     LE       │      │     704          │   │
│   │        702             │      │                  │   │
│   │                       │      │                  │   │
│   └───────────────────────┘      └──────────────────┘   │
│                                                         │
│                            PROCES      SOR              │
│                                   700                   │
│                                                         │
└─────────────────────────────────────────────────────────┘
```

FIG   . 7

**European Patent Office**

# EUROPEAN SEARCH REPORT

Application Number

EP 06 30 0148

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LU J ET AL: "On the implementation of weighted fair queuing in high speed networks" ELECTRICAL AND COMPUTER ENGINEERING, 2004. CANADIAN CONFERENCE ON NIAGARA FALLS, ONT., CANADA 2-5 MAY 2004, PISCATAWAY, NJ, USA,IEEE, US, 2 May 2004 (2004-05-02), pages 809-813Vol2, XP010733569 ISBN: 0-7803-8253-6 * abstract * * page 810, column 1, line 23 - column 2, line 26 * * page 811, column 1, line 42 - column 2, line 46 * * page 811, column 2, line 49 - page 812, column 1, line 30 * * page 813, column 1, line 8 - line 22 * * page 813, column 1, line 24 - line 54 * ----- | 1-22 | H04L12/56 |
| A | EP 1 324 553 A (ALCATEL CANADA INC) 2 July 2003 (2003-07-02) * abstract * * page 2, paragraphs 1,4 * * page 3, paragraph 6-10 * * page 5, paragraph 13-15 * * page 15, paragraphs 48,49,53 * * page 16, paragraph 58 - page 17, paragraph 67 * * page 21, paragraph 95 - page 22, paragraph 97 * * claims 1,3-5,12,14-16,23,34 * * figures 1,2,7-11 * ----- | 1-22 | TECHNICAL FIELDS SEARCHED (IPC) H04L |

The present search report has been drawn up for all claims

| Place of search | Date of completion of the search | Examiner |
|---|---|---|
| Munich | 6 April 2006 | Schrembs, G |

EPO FORM 1503 03.82 (P04C01)

**ANNEX TO THE EUROPEAN SEARCH REPORT
ON EUROPEAN PATENT APPLICATION NO.**                    EP 06 30 0148

This annex lists the patent family members relating to the patent documents cited in the above-mentioned European search report.
The members are as contained in the European Patent Office EDP file on
The European Patent Office is in no way liable for these particulars which are merely given for the purpose of information.

06-04-2006

| Patent document cited in search report | Publication date | Patent family member(s) | Publication date |
|---|---|---|---|
| EP 1324553 A | 02-07-2003 | NONE | |

EPO FORM P0459

For more details about this annex : see Official Journal of the European Patent Office, No. 12/82